# EUROPEAN PATENT APPLICATION

(11) **EP 4 693 943 A1**
(43) Date of publication of application: **11.02.2026**
(21) Application number: 23931596.3
(22) Date of filing: 07.04.2023
(51) Int. Cl.: H04B 7/155

(54) **INFORMATION SENDING METHOD, INFORMATION RECEIVING METHOD, REPEATER AND NETWORK DEVICE**

(71) Applicant: FUJITSU LIMITED, Kawasaki-shi, Kanagawa 211-8588 (JP)
(72) Inventor: JIANG, Qinyan, Beijing 100022 (CN); ZHANG, Lei, Beijing 100022 (CN)
(74) Representative: Haseltine Lake Kempner LLP
(86) International application number: PCT/CN2023/087156
(87) International publication number: WO 2024/207537

(57) **Abstract**

Embodiments of this disclosure provide an information transmission method, an information reception method, a repeater and a network device. The information reception method includes: receiving a first indication indicating a first time-domain resource by a repeater, the first time-domain resource overlapping or not overlapping with a first flexible symbol, and/or overlapping or not overlapping with a second time-domain resource, the second time-domain resource being indicated by a second indication or the first indication.

## Description

### Technical Field

This disclosure relates to the field of communication technologies.

### Background

Compared with legacy 3G (third generation mobile communication technology) and 4G (fourth generation mobile communication technology) systems, a 5G (fifth generation mobile communication technology) system can provide larger bandwidths and higher data rates, and is able to support more types of terminals and vertical services.

For this reason, 5G systems are also deployed at new spectrum in addition to legacy telecommunications spectrum, and frequencies of the spectrum are obviously higher than those of legacy telecommunications spectrum used in 3G and 4G systems. For example, a 5G system may be deployed in a millimeter waveband (such as 28 GHz, 38GHz, 60 GHz, and higher wavebands).

According to the principle of propagation of wireless signals, the higher a carrier frequency, the more severe a fading experienced by signals during transmission. Therefore, in actual deployment, a 5G system needs a cell coverage enhancement method more than 3G and 4G systems need, especially a 5G system deployed in a millimeter waveband. Hence, how to better enhance cell coverage of a 5G system has become an urgent problem to be solved.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

In order to better solve the coverage problem of cellular mobile communication systems in practical deployment, use of a radio frequency (RF) relay/repeater to amplify and forward signals between a terminal equipment (UE) and a network device is commonly used means of deployment. RF repeaters are widely used in actual deployment of 3G and 4G systems. Generally speaking, an RF repeater is a device that amplifies and forwards signals between devices in the RF domain. That is, an RF repeater is a non-regenerative relay node, which only directly amplifies and forwards all received signals.

It was found by the inventors that for a coverage problem encountered in deploying a 5G system, performing coverage enhancement by using a legacy RF repeater is one of feasible solutions. However, as a forwarding behavior of legacy RF repeater is not controlled by a network, on the one hand, an effect of amplifying and forwarding a target signal by the repeater may possibly be not ideal, and on the other hand, it may pose significant interference to other devices in the network, and increase noise and interference levels of the system, thereby reducing network throughput. Specifically, taking an antenna direction as an example, compared to 2G, 3G and 4G systems, a 5G system adopts the more advanced and complex MIMO (multiple-input multiple-output) technology. In the 5G system, especially for higher carrier frequencies, directional antennas have become basic components of a network device and a terminal equipment. Transmitting and receiving signals based on a beamforming technology is a fundamental signal transmission mode in the 5G system. (Analog) beam directions and widths, etc., of the network device and terminal equipment may dynamically change (i.e. beam switching) due to such factors as changes of positions. However, antennas of a legacy RF repeater may not be dynamically adjusted with respect to directions and have relatively wide beams, and beam directions and beam widths of transmitting and receiving antennas of the RF repeater are unable to flexibly match positions of the network device and terminal equipment and dynamic changes of the beam directions and widths of the transmitting and receiving antennas. If such an RF repeater is configured in the 5G system, on the one hand, its performance/effect of amplifying/enhancing target signals is/are not significant due to that the beam directions and beam widths of its transmitting and receiving antennas do not match the beam directions and beam widths of the network device and terminal equipment, and on the other hand, it may also cause significant interference to other devices (e.g. a network device or a terminal equipment) within a larger range due to use of wider transmitting beams, and increase noise and interference levels of the entire system, thereby reducing network throughput.

A network controlled repeater (NCR) scheme is proposed in 3GPP Rel-18 to enhance NR coverage, so as to forward signals between a network device and a terminal equipment. NCR may directly communicate with the network device via control links to assist in forwarding operations of the NCR.

It was found by the inventors that whether time-domain resources to which access link beams of the repeater correspond may overlap or whether the time-domain resources may overlap with flexible symbols and how to process in case of overlapping have become urgent problems to be solved.

In order to solve at least one of the above problems, embodiments of this disclosure provide an information transmission method, an information reception method, a repeater and a network device.

According to one aspect of the embodiments of this disclosure, there is provided a network device, including:
a transmitting unit configured to transmit first indication indicating a first time-domain resource to a repeater, the first time-domain resource overlapping or not overlapping with a first flexible symbol, and/or overlapping or not overlapping with a second time-domain resource, the second time-domain resource being indicated by a second indication or the first indication.

According to another aspect of the embodiments of this disclosure, there is provided a repeater, including:
a receiving unit configured to receive a first indication indicating a first time-domain resource, the first time-domain resource overlapping or not overlapping with a first flexible symbol, and/or overlapping or not overlapping with a second time-domain resource, the second time-domain resource being indicated by a second indication or the first indication.

According to a further aspect of the embodiments of this disclosure, there is provided a communication system, including the repeater as described in the another aspect and/or the network device as described in the one aspect.

An advantage of the embodiments of this disclosure exists in that by clarifying that time-domain resources to which access link beams correspond overlap or do not overlap with flexible symbols and processing in case of overlapping, the time-domain resources when the repeater performs forwarding (forwarding uplink/downlink signals) may be made to match with time-domain resources of the terminal equipment receiving/transmitting signals, thereby improving effects of amplifying/enhancing signals, saving power consumption of the repeater, reducing interference to other devices in the network, and improving throughput of the network.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/comprising/include/including" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiments of the disclosure may be combined with elements and features depicted in one or more additional drawings or embodiments. Moreover, in the drawings, like reference numerals designate corresponding parts throughout the several views and may be used to designate like or similar parts in more than one embodiment.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is schematic diagram of a communication system of embodiments of this disclosure;
FIG. 2 is a schematic diagram of an information reception method of embodiments of this disclosure;
FIG. 3 is a schematic diagram of an information transmission method of embodiments of this disclosure;
FIG. 4 is a schematic diagram of a repeater of embodiments of this disclosure;
FIG. 5 is a schematic diagram of a network device of embodiments of this disclosure;
FIG. 6 is a schematic diagram of an electronic device of embodiments of this disclosure;
FIGs. 7A-7C are schematic diagrams of overlapping of time-domain resources and flexible symbols in embodiments of this disclosure;
FIGs. 8A-8C are schematic diagrams of overlapping of time-domain resources indicated by the same indication in embodiments of this disclosure;
FIGs. 9A-9D are schematic diagrams of overlapping of time-domain resources indicated by different indications in embodiments of this disclosure;
FIGs. 10A-10C are schematic diagrams of overlapping of time-domain resources and flexible symbols in embodiments of this disclosure; and
FIG. 11 is a schematic diagram of an MAC CE of embodiments of this disclosure.

### Detailed Description of the Disclosure

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" refers to, for example, an equipment accessing to a communication network and receiving network services via a network device, and may also be referred to as "a terminal equipment (TE)". The terminal equipment may be fixed or mobile, and may also be referred to as a mobile station (MS), a terminal, a subscriber station (SS), an access terminal (AT), an IAB-MT, or a station, etc.

The terminal equipment may include but not limited to the following devices: a cellular phone, a personal digital assistant (PDA), a wireless modem, a wireless communication device, a hand-held device, an machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

In the embodiments of this disclosure, existing traffics or traffics that may be implemented in the future may be performed between a network device and a terminal equipment. For example, such traffics may include but not limited to enhanced mobile broadband (eMBB), massive machine type communication (mMTC), ultra-reliable and low-latency communication (URLLC), and vehicle to everything (V2X) communication, etc.

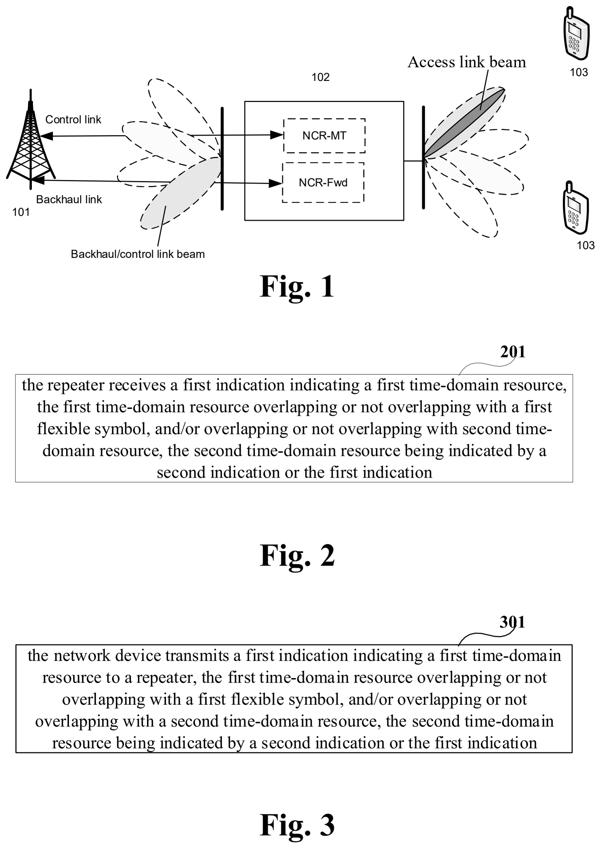

FIG. 1 is schematic diagram of an NCR of embodiments of this disclosure. As shown in FIG. 1, NCR 102 is configured between a network device 101 and a terminal equipment 103. NCR 102 may include the following two modules/components: a mobile termination of the repeater (NCR-MT) and a forwarding unit of the repeater (NCR-Fwd). The NCR-Fwd may also be referred to as a routing unit of the NCR (NCR-RU). The NCR-MT is used for communication with the network device (information exchange), the NCR-Fwd is used for forwarding signals between the network device and the terminal equipment, and the NCR-MT and NCR-Fwd are functional entities, with functions thereof being implemented by identical or different hardware modules.

As shown in FIG. 1, the NCR of the embodiments of this disclosure may have three links: a control link (C-link), a backhaul link (BH-link) for forwarding, and an access link (AC-link, also referred to as an NCR-UE link), wherein the C-link is used for communication between the NCR and the network device, the BH-link is used by the repeater to receive signals to be forwarded from the network device, or forward signals from the terminal equipment to the network device, and the AC-link is used by the repeater to forward signals from the network device to the terminal equipment, or receive signals to be forwarded from the terminal equipment. Specifically, the NCR-MT communicates with the network device via the C-link, and the NCR-Fwd forwards signals via the BH-link and the AC-link.

In the embodiments of this disclosure, the repeater may also be expressed as a network-controlled repeater (NCR), a radio frequency repeater, a relay, a radio frequency relay; or, it may also be expressed as a repeater node, or a relay node; or, it may also be expressed as an intelligent repeater, an intelligent relay, an intelligent repeater node, an intelligent relay node, etc.; however, this disclosure is not limited thereto.

In the embodiments of this disclosure, the network device may be a device of a serving cell of the terminal equipment, or a device in a cell where the repeater is located, or a device of a serving cell of the repeater, or a parent node of the repeater. Names of the repeater are not limited in this disclosure, and any device able to achieve the above functions is included in the scope of the repeater of this disclosure.

In the embodiments of this disclosure, higher-layer signaling may be, for example, radio resource control (RRC) signaling; for example, it includes an RRC message, which includes a master information block (MIB), system information, and a dedicated RRC message; or, it is an RRC information element (RRC IE); or an information field (or an information field included in an information field) included in an RRC message or an RRC information element. Higher-layer signaling may also be, for example, medium access control (MAC) signaling, or referred to as an MAC control element (MAC CE); however, this disclosure is not limited thereto.

In the embodiments of this disclosure, multiple means at least two, or two or more than two.

In the embodiments of this disclosure, "predefined" means defined in a protocol or determined according to a rule defined in a protocol, without needing additional configuration. Configuration/indication refer(s) to configuring/indicating directly or indirectly by a network device via higher-layer signaling and/or physical layer signaling. Configuration/indication may be performed by introducing a higher-layer parameter into the higher-layer signaling, the higher-layer parameter referring to an information field and/or an information element (IE) in the higher-layer signaling. The physical layer signaling refers to, for example, control information (DCI) carried by a physical control channel or control information carried by a sequence; however, it is not limited thereto.

Implementations of the embodiments of this disclosure shall be described below with reference to the accompanying drawings. These implementations are illustrative only, and are not intended to limit this disclosure.

### Embodiments of a first aspect

The embodiments of this disclosure provide an information reception method, which shall be described from a repeater side.

FIG. 2 is a schematic diagram of the information reception method of the embodiments of this disclosure. As shown in FIG. 2, the method includes:
201: the repeater receives a first indication indicating a first time-domain resource , the first time-domain resource overlapping or not overlapping with a first flexible symbol, and/or overlapping or not overlapping with a second time-domain resource, the second time-domain resource being indicated by a second indication or the first indication.

It should be noted that FIG. 2 only schematically illustrates the embodiments of this disclosure; however, this disclosure is not limited thereto. For example, an order of execution of the operations may be appropriately adjusted, and furthermore, some other operations may be added, or some operations therein may be reduced. And appropriate variants may be made by those skilled in the art according to the above contents, without being limited to what is contained in FIG. 2.

In some embodiments, (a type of) the first indication may be a periodic beam indication, or a semi-persistent beam indication, or a dynamic beam indication, and the second indication may be a periodic beam indication, or a semi-persistent beam indication, or a dynamic beam indication.

For the periodic beam indication: forwarding resources or forwarding resource lists are configured via RRC signaling. Each periodic beam indication includes forwarding resource lists, each of which including a first information field beamEndx-r18 indicating an access link beam and a second information field periodicTimeResource-r18 indicating a time-domain resource, the second information field including duration information and/or offset information of the time-domain resource in a period; furthermore, the periodic beam indication may include period information and/or priority information priorityFlag-r18, and may further include a third information field referenceSCS-r18 for indicating a subcarrier spacing, wherein the indicated subcarrier spacing refer to reference subcarrier spacing for all time-domain resources indicated by the periodic beam indication; however, the embodiments of this disclosure is not limited thereto. The network device may transmit one or more periodic beam indications to the NCR, each of which including one or more of the above first information field, second information field, third information field, period information periodicity-r18 and priority information. For example, ToAddModList or other lists may be used for configuration, thereby configuring one or more lists, wherein one list includes one periodic beam indication.

For example, the periodic beam indication is denoted as follows by using ASN. 1:

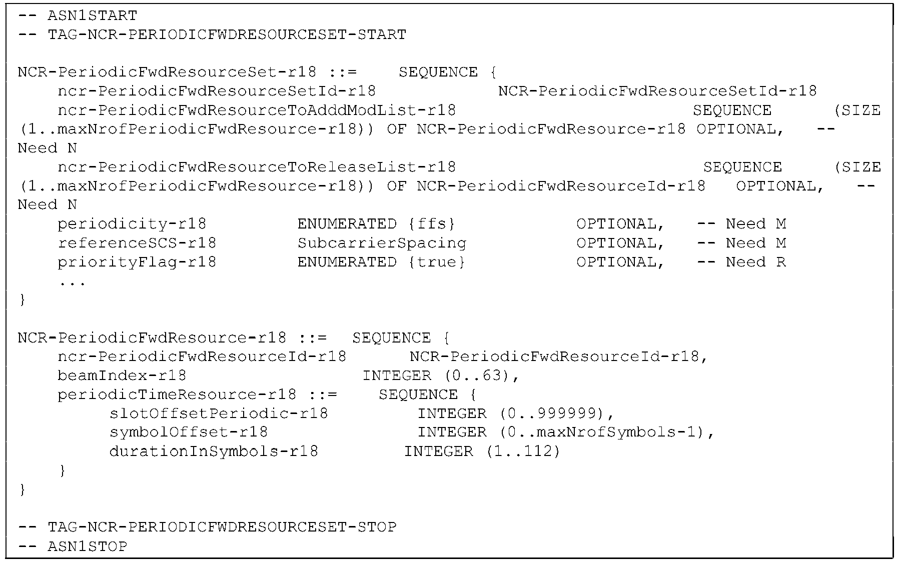

For the semi-persistent beam indication, a method thereof for configuring forwarding resource lists via RRC signaling is similar to that of the periodic beam indication, except that it includes activating or deactivating forwarding resource lists by MAC CEs. For example, one first MAC CE (e.g. an NCR access link beam indication MAC CE) activates or deactivates one semi-persistent forwarding resource list.

For example, the semi-persistent beam indication is denoted as follows by using ASN. 1:

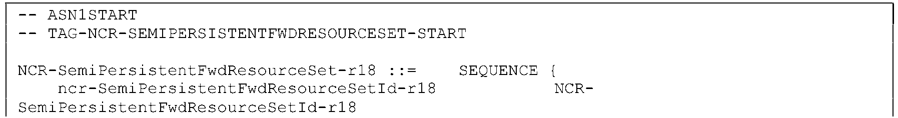

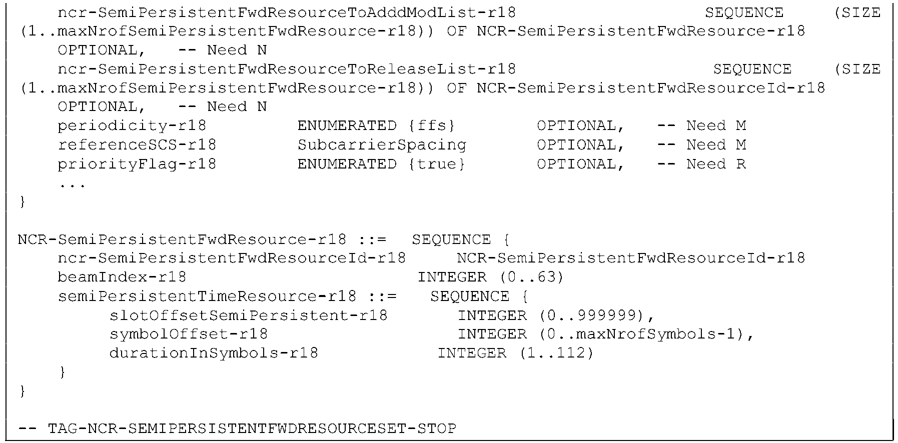

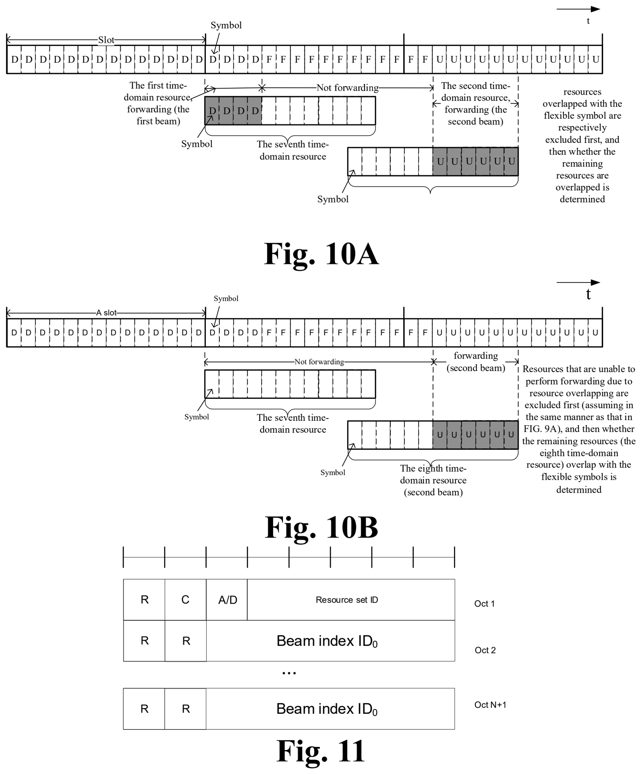

In addition, a structure of the MAC CE may be as shown in FIG. 11, in which a resource set ID field is included, which is used for indicating one of the semi-persistent forwarding resource lists. When a value of an activation/deactivation A/D field is 1, it indicates activated indicated resources, and when a value thereof is 0, it indicates deactivated indicated resources, and vice versa. The beam index ID field is used to indicate a beam index to which the time-domain resource corresponds, and furthermore, reserved bits, etc., may be included.

For the aperiodic beam indication, the following may also be replaced with DCI, which may include one or more first information fields for indicating beams and one or more second information fields for indicating time-domain resources. The DCI (may) has/adopts a first DCI format, the first DCI format being only used for repeaters. The first DCI format or the DCI is used to carry (aperiodic or dynamic) beam indications or side control information, and/or for transmission or notification of (aperiodic/dynamic) beam indications of access links or side control information, and/or for indicating (aperiodic or dynamic) forwarding time resources or forwarding resources, and/or for indicating that the repeater or the forwarding unit of the repeater is on, and/or for indicating that an access link and/or a backhaul link is/are on, and/or, for (aperiodically or dynamically) indicating access link beams and/or time-domain resources. The on indicates that the NCR-Fwd (should) forwards signals, or indicates that signals may be forwarded on an access link and/or a backhaul link, including forwarding downlink signals from the network device to the terminal equipment and/or forwarding uplink signals from the terminal equipment to the network device. The first DCI format may be a newly-introduced DCI format (e.g. DCI format 5_0), which is not used for scheduling PDSCHs and/or PUSCHs, and is unicast. However, the embodiments of this disclosure are not limited thereto, and the DCI format may also be an existing DCI format, and/or may be used for scheduling PDSCHs and/or PUSCHs, which is groupcast/multi-cast/broadcast.

In the embodiments of this disclosure, "the downlink control information in the first DCI format" or "the downlink control information using the first DCI format" or "the DCI in the first DCI format" may also be directly referred to as "a first DCI format" in brief, and other DCI formats may also be understood in the same manner.

In some embodiments, the first information field indicates a beam by indicating an beam index. The beam refers to an access link beam or a beam for an access link.

In some embodiments, the DCI includes one or more first information fields, wherein one first information field must indicate one beam or at most one beam (i.e. it may not indicate a beam). For example, first information fields having/corresponding to different sequence numbers must indicate one beam, or they may not indicate a beam, or some (such as a first one of the first information fields) must indicate a beam, while others (such as first information fields other than the first one) may not indicate a beam.

In some embodiments, when the DCI includes a second information field, one second information field is used to indicate one time-domain resource index, or at most one time-domain resource index. This index may also be replaced with a sequence number or an identifier (ID). A case where the DCI does not include the second information fields shall be described later, and the following description shall be given by taking that the DCI includes the second information field as an example.

In some embodiments, the second information field indicates a time-domain resource via a time-domain resource list. The time-domain resource list includes one or more time-domain resource configurations, and the time-domain resource list includes configuration of at least one time-domain resource. A time-domain resource is defined by, for example, one or more of the following parameters: a slot offset (slotOffsetAperiodi-r18, for determining a starting slot), a symbol offset (symbolOffset-r18, for determining a starting symbol in a slot), and the number of symbols (durationInSymbols-r18, for determining a duration of a time-domain resource). Wherein, the slot offset refers to an offset between a slot where a time-domain resource is located or a first one of slots where a time-domain resource is located and a reference point. The symbol offset refers to an offset between a first one of symbols of a time-domain resource and a first one of symbols in a slot where the time-domain resource is located or a first one of symbols in a first one of slots where the time-domain resource is located. The symbol offset and/or the number of symbols, for example, must ensure that configured time-domain resources are within the same slot, or that the configured time-domain resources may be within the same slot or across slots.

For example, the time-domain resource list may be configured via RRC signaling, such as:

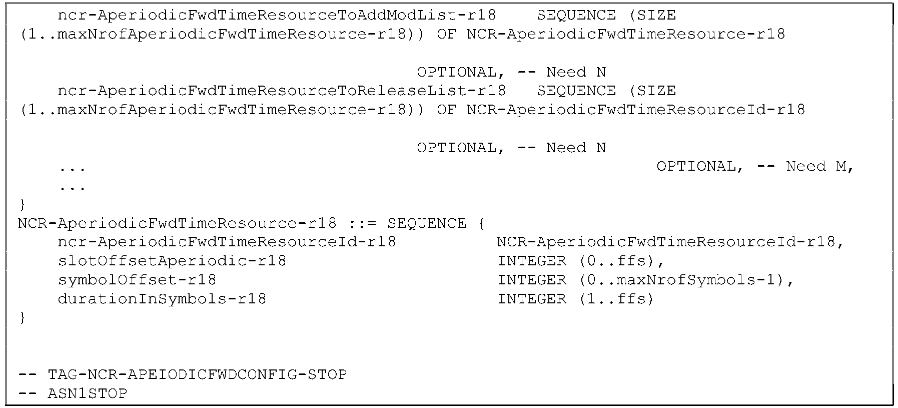

That is, information ncr-AperiodicFwdTimeResourceToAddModList-r18 used for add or modify time-domain resources and ncr-AperiodicFwdTimeResourceToReleaseList-r18 (time-domain resources used for releasing/removing) may configure the time-domain resource list.

The first indication and the second indication may be identical or different types of beam indications.

When they are identical types of beam indications:
for example, both the first indication and the second indication are periodic beam indications, the first indication and the second indication are configured by different first information, and/or are identified by different IDs (e.g. configured by second information (e.g. ncr-PeriodicFwdResourceId/periodicFwdRsrcId/PeriodicFwdRsrcId)).

For example, both the first indication and the second indication are semi-persistent beam indications, the first indication and the second indication are identified by different third information, and/or by different IDs (e.g. configured by fourth information (ncr-SemiPersistentFwdResourceSetId/)), and/or activated/deactivated by different fifth information (MAC CEs).

The above first information, second information, third information and fourth information may be carried by RRC signaling.

For example, both the first indication and the second indication are dynamic/aperiodic beam indications, and the first indication and the second indication are carried/transmitted by different DCI (of time-frequency resources) or PDCCHs carrying the DCI.

In the following embodiments, overlapping is also referred to as superimposing, and indicates partial overlapping, incomplete overlapping, or complete overlapping, and that time-domain resources overlap with flexible symbols, or it may be indicated as that time-domain resources include flexible symbols, or time-domain resources do not overlap with flexible symbols, or it may be indicated as that time-domain resources do not include flexible symbols, and first time-domain resources overlap with second time-domain resources, or it may be indicated as that first time-domain resources include all or a part of second time-domain resources, or second time-domain resources include all or part of first time-domain resources. That the first time-domain resources do not overlap with the second time-domain resources may also be expressed as that the first time-domain resources do not include (all of) the second time-domain resources, or the second time-domain resources do not include (all of) the first time-domain resources.

These cases shall be described below.
(I) Whether the first time-domain resource conflicts with the first flexible symbol and conflict resolving

In some embodiments, a first subcarrier spacing of the first time-domain resource is identical to or different from a second subcarrier spacing of the first flexible symbol. The first flexible symbol is a semi-static flexible symbol. For example, the repeater may determine the first flexible symbols via a TDD configuration, which includes a first TDD configuration received in the mobile termination of the repeater (such as TDD-UL-DL-ConfigCommon), and/or a second TDD configuration received in the mobile termination of the repeater (such as TDD-UL-DL-ConfigDedicated). For example, the first and/or second TDD configuration(s) may flexibly configure transmission direction types for the time-domain resources, wherein the transmission direction types include uplink, downlink, and flexible, wherein the second TDD configuration is unable to rewrite downlink or uplink of the first TDD configuration. That is, if the first TDD configuration configures a slot or symbol as downlink (or uplink), the second TDD configuration is unable to reconfigure the slot or symbol as uplink or flexible (or downlink or flexible), even if it is configured as uplink or flexible (or downlink or flexible) in the second TDD configuration, the configuration in the first TDD configuration (still downlink (or uplink)) shall prevail. The second TDD configuration may rewrite the flexible configured by the first TDD configuration into downlink or uplink. That is, if the first TDD configuration configures a slot or symbol as flexible, or does not configure it as uplink or downlink, the second TDD configuration may configure it as downlink or uplink, and of course, it may also configure it as flexible.

In some embodiments, the first time-domain resource does not overlap with the first flexible symbol, and the repeater does not expect that the time-domain resource indicated by the first indication (first time-domain resource) overlap with the first flexible symbol, or the repeater expects that the time-domain resource indicated by the first indication (first time-domain resources) do not overlap with the first flexible symbol. That is, a case where the first time-domain resource overlaps with the first flexible symbol needs to be avoided, or conflicts between the first time-domain resource and the first flexible symbol need to be avoided, so that conflict resolution is not needed.

In some embodiments, the first time-domain resource overlaps or does not overlap with the first flexible symbol (there possibly exist conflicts), and the repeater does not expect that the time-domain resource indicated by the first indication (first time-domain resource) overlaps completely with the first flexible symbol, or the repeater expects that the time-domain resource indicated by the first indication (first time-domain resource) does not overlap with the first flexible symbol completely or overlap with the first flexible symbols incompletely. That is, a case where the first time-domain resource overlaps with the first flexible symbol completely needs to be avoided, or in other word, the first time-domain resource need to include resources not overlapping with the first flexible symbol.

In some embodiments, the first time-domain resource overlaps or does not overlap with the first flexible symbol (there possibly exist conflicts), and the repeater does not expect that the time-domain resource indicated by the first indication (first time-domain resource) overlaps partially with the first flexible symbol, or the repeater expects that the time-domain resource indicated by the first indication (first time-domain resource) does not overlap with the first flexible symbol completely or overlaps with the first flexible symbol completely. That is, a case where the first time-domain resource overlaps with the first flexible symbol partially needs to be avoided, or in other word, symbols included in the first time-domain resource are all the first flexible symbols, or the first time-domain resource does not include the first flexible symbols.

In some embodiments, for the situation where there may possibly exist conflicts, in the case where the first time-domain resource overlaps with the first flexible symbol, the repeater does not forward in the first time-domain resource.

The first time-domain resource is indicated by a second information field (a second information field X), wherein the second information field X and/or a second information field after the second information field X do(es) not indicate a time-domain resource(s) and/or is/are invalid and/or is/are set to be a second specific value and/or is/are ignored by the repeater, and/or, a first information field to which the second information field corresponds and/or a first information field to which a second information field after the second information field do(es) not indicate a beam and/or is/are invalid and/or is/are set to a fourth specific value and/or is/are ignored by the repeater, and/or, an information field after the second information field is invalid and/or set to a fifth specific value and/or is ignored by the repeater, and/or, a first information field included in an information block where the second information field is located does not indicate a beam and/or is invalid and/or is set to a fourth specific value and/or is ignored by the repeater, and/or, a first information field included in an information block after an information block where the second information field is located does not indicate a beam and/or is invalid and/or is set to a fourth specific value and/or is ignored by the repeater, and/or a second information field included in an information block after an information block where the second information field is located does not indicate a time-domain resource and/or is invalid and/or is set to a second specific value and/or is ignored by the repeater, and/or the second information field is a last information field (of the downlink control information), and/or an information block where the second information field is located is a last information block (of the downlink control information), and/or, the second information field is a last second information field (of the downlink control information), and/or a first information field to which the second information field corresponds is a last first information field (of the downlink control information), and/or the second information field does not have a corresponding first information field.

In some embodiments, for the cases where there may possibly exist conflicts, in the case where the first time-domain resource overlaps with the first flexible symbol, the repeater does not forward or forward on a first part of the resource of the first time-domain resource, and/or forwards or does not forward on a second part of the resource of the first time-domain resource. The first part of the resource includes a resource (in the first time-domain resource) overlapping with the first flexible symbol and/or a resource overlapping with a first time period. The second part of the resource includes a resource (in the first time-domain resource) not overlapping with the first flexible symbol, or a resource in the resource (in the first time-domain resource) not overlapping with the first flexible symbol other than the first time period, or a resource (in the first time-domain resource) not overlapping with the first flexible symbol and not overlapping with the first time period. The first time period at least includes a time period of the first part of the resource and/or a processing time, the processing time including, for example, a switch time of on/off of the repeater, etc.; however, the embodiments of this disclosure are not limited thereto.

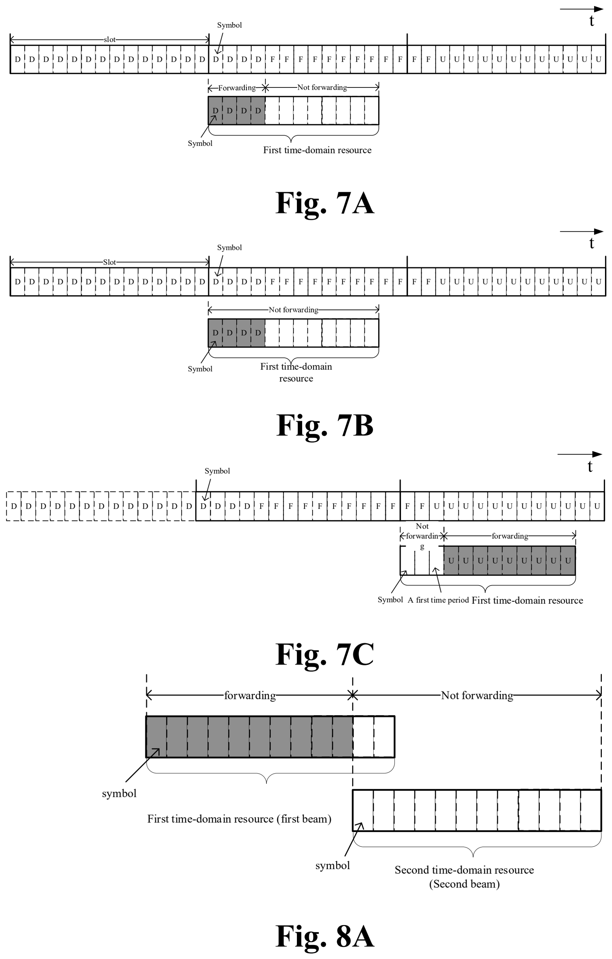

FIGs. 7A-7C are schematic diagrams of overlapping of time-domain resources and flexible symbols in the embodiments of this disclosure. As shown in FIG. 7A, in the first time-domain resources, former four symbols are downlink symbols, and latter eight symbols are first flexible symbols. Therefore, forwarding (downlink forwarding) is performed in the former four symbols (second part of the resource), and no forwarding is performed in the latter eight symbols (first part of the resource). As shown in FIG. 7B, in the first time-domain resources, former four symbols (second part of the resource) are downlink symbols, and latter eight symbols (first part of the resource) are first flexible symbols, and no forwarding is performed in the first time-domain resource. As shown in FIG. 7C, in the first time-domain resources, former two symbols are flexible symbols, and latter ten symbols are uplink symbols, no forwarding is performed at the first time period and in the former two symbols (first part of the resource), and forwarding is performed in the (latter nine symbols of) second part of the resource.

Implementations of whether the second time-domain resources conflict with the second flexible symbols and conflict resolution are similar to (I), which shall not be repeated herein any further. The third subcarrier spacing of the second time-domain resource is identical to or different from the fourth subcarrier spacing of the second flexible symbol, and reference may be made to the first flexible symbol for configuration of the second flexible symbol, which shall not be repeated herein any further.

(II) Whether the first time-domain resource conflicts with the second time-domain resource indicated by the first indication and conflict solving

In some embodiments, the first subcarrier spacing of the first time-domain resource is identical to or different from a third subcarrier spacing of the second time-domain resource. The first time-domain resource and the second time-domain resource are indicated by different second information fields in the first indication.

In some embodiments, that the first time-domain resource and the second time-domain resource do not overlap refers to that different time-domain resources indicated by the same indication (the first indication or the second indication) will not overlap or conflict. For example, the repeater does not expect that different (2 or more) time-domain resources indicated by the first indication overlap (or, time-domain resources indicated by different second information fields of the first indication do not overlap), or, the repeater expects that different time-domain resources indicated by the first indication do not overlap (or, time-domain resources indicated by different second information fields in the first indication do not overlap). That is, a case where the first time-domain resource overlaps with the first flexible symbol needs to be avoided, or conflicts between the first time-domain resource and the second time-domain resource need to be avoided, or conflicts between time-domain resources indicated by different second information fields of the first indication need to be avoided, so that conflict resolution is not needed. For example, when the first indication is DCI, values of any two second information fields are different, and/or indicated time-domain resource indices are different, and/or time-domain resources included in time-domain resource indices in a corresponding time-domain resource list do not overlap completely. For example, the number of non-overlapped time-domain resources and/or the number of entries of non-overlapped time-domain resources included in the time-domain resource list is/are greater than or equal to the number of second information fields included in the DCI and/or the number of first information fields included in the DCI; however, it is not limited thereto.

In some embodiments, the first time-domain resource overlaps or does not overlap (possibly conflict) with the second time-domain resource, and the repeater does not expect that different time-domain resources indicated by the first indication overlap completely, or the repeater expects that different time-domain resources indicated by the first indication do not overlap completely or overlap incompletely. That is, a case the first time-domain resource completely overlaps with the second time-domain resource needs to be avoided. For example, when the first indication is DCI, a value of a second information field used to indicate the first time-domain resource and a value of a second information field used to indicate the second time-domain resource are different, and time-domain resources included in time-domain resource indices in time-domain resource lists to which the values correspond do not overlap completely.

In some embodiments, the first time-domain resource overlaps or does not overlap (possibly overlap or conflict) with the second time-domain resource, and the repeater does not expect that different time-domain resources indicated by the first indication overlap partially, or the repeater expects that different time-domain resources indicated by the first indication do not overlap completely or overlap completely. For example, when the first indication is DCI, a value of a second information field used to indicate the first time-domain resource and a value of a second information field used to indicate the second time-domain resource are identical (overlap completely). Or, for example, the number of non-overlapped time-domain resources and/or the number of entries of non-overlapped time-domain resources included in the time-domain resource list is/are greater than or equal to the number of the second information fields included in the DCI and/or the number of the first information field included in the DCI. A value of a second information field used to indicate the first time-domain resources and a value of a second information field used to indicate the second time-domain resources are different, and time-domain resources included in time-domain resource indices in time-domain resource lists to which the values correspond do not overlap completely.

In some embodiments, beams indicated for the first time-domain resource and the second time-domain resource are identical or different.

In some embodiments, for the above situation where conflicts may possibly occur, in the case where the first time-domain resource overlaps with the second time-domain resource, the repeater does not forward in the second time-domain resource, or does not forward in the resource of the second time-domain resource that does not overlap with the first time-domain resource, and/or, performs forwarding in the first time-domain resource (by using a first beam), or, performs forwarding in the resource of the first time-domain resource that does not overlap with the second time-domain resource (by using the first beam).

In some embodiments, for the above case where conflicts may possibly occur, in the case where the first time-domain resource overlaps with the second time-domain resource, the repeater forwards on a union of the first time-domain resource and the second time-domain resource (by using the same beam, such as the first beam or the second beam).

In the above embodiment, a second information field Y used to indicate the second time-domain resource is after a second information field X used to indicate the first time-domain resource. The second information field Y and/or a second information field after the second information field Y does/do not indicate a time-domain resource and/or is/are invalid and/or is/are set to be a second specific value and/or is/are ignored by the repeater, and/or, a first information field to which the second information field Y corresponds and/or a first information field to which a second information field correspond after the second information field does/do not indicate a beam and/or is/are invalid and/or is/are set to be a fourth specific value and/or is/are ignored by the repeater, and/or, an information field after the second information field Y is invalid and/or is set to be a fifth specific value and/or is ignored by the repeater, and/or, a first information field included in an information block where the second information field Y is located does not indicate a beam and/or is invalid and/or is set to be a fourth specific value and/or is ignored by the repeater, and/or a first information field included in an information block after an information block where the second information field Y is located does not indicate a beam and/or is invalid and/or is set to be a fourth specific value and/or is ignored by the repeater, and/or, a second information field included in an information block after an information block where the second information field Y is located does not indicate a time-domain resource and/or is invalid and/or is set to be a second specific value and/or is ignored by the repeater, and/or the second information field Y is a last information field (of the downlink control information), and/or an information block where the second information field Y is located is a last information block (of the downlink control information), and/or, the second information field Y is a last second information field (of the downlink control information), and/or, a first information field to which the second information field Y corresponds is a last first information field (of the downlink control information), and/or, the second information field Y does not have a corresponding first information field.

In the above embodiments, the specific values are represented in binary, and all bits may be 0 or 1. For another example, taking decimal as an example, the specific values may be 0.

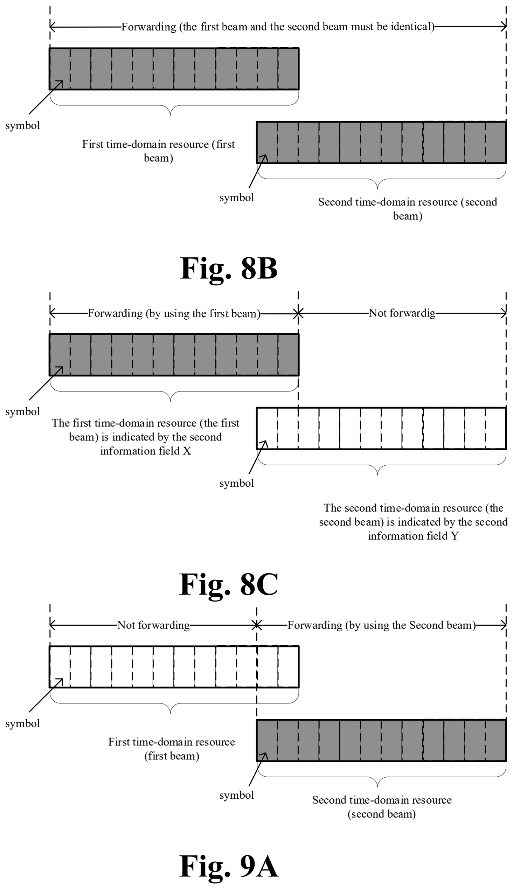

FIGs. 8A-8C are schematic diagrams of overlapping of time-domain resources (indicated by the same indication) in the embodiments of this disclosure. As shown in FIG. 8A, two symbols in the first time-domain resource and the second time-domain resource are overlapped, forwarding is performed (by using the first beam) in the resource of the first time-domain resource that does not overlap with the second time-domain resource, and forwarding is not performed in the second time-domain resource and the resource of the first time-domain resource that does not overlap with the second time-domain resource. As shown in FIG. 8B, two symbols in the first time-domain resource and the second time-domain resource are overlapped, the first beam and the second beam must be identical, and forwarding is performed (by using the same beam, such as the first beam or the second beam) in the first time-domain resource and the second time-domain resource. As shown in FIG. 8C, the second information field Y used for indicating the second time-domain resource is after the second time-domain resource X used for indicating the first time-domain resource, two symbols of the first time-domain resource and the second time-domain resource are overlapped, forwarding is performed in the first time-domain resource by using the first beam, and forwarding is not performed in the time-domain resource of the second time-domain resource that is not overlapped with the first time-domain resource.

In the above embodiment, the first beam is indicated by a first information field corresponding to the second information field indicating the first time-domain resource, or, is a beam corresponding to the first time-domain resource indicated by the first indication, and the second beam is indicated by a first information field corresponding to the second information field indicating the second time-domain resource, or, is a beam corresponding to the second time-domain resource indicated by the first indication.

(III) Whether the first time-domain resources conflict with the second time-domain resources indicated by the second indication and conflict resolving

In some embodiments, the first subcarrier spacing of the first time-domain resource is identical to or different from the third subcarrier spacing of the second time-domain resource, and priorities of the first indication and the second indication are identical or different.

It should be noted a priority order of various types of beam indications is as follows: semi-persistent beam indication A (configured with a priority flag, activated)>periodic beam indication A (configured with a priority flag)>aperiodic beam indication>semi-persistent beam indication B (not configured with a priority flag, activated)>periodic beam indication B (not configured with a priority flag), and one or more thereof may be configured/provided for the NCR, and different types may have one or more beam indications.

For the aperiodic beam indication, a priority of an aperiodic beam indication received later in the time-domain is higher than that of a previous aperiodic beam indication. That is, for DCI using the first DCI format received at different time-domain positions, a priority of an indication in latter DCI in the time-domain is higher than that of an indication in previous DCI.

When multiple (2 or more) beam indications with different priorities conflict, forwarding is performed according to a beam indication with a higher/highest priority.

For example, the conflict refers to when time-domain resources indicated respectively by multiple beam indications with different priorities partially or completely overlap. For example, forwarding is performed in the time-domain resource indicated by the beam indication with a higher/highest priority by using a corresponding beam indicated thereby, and time-domain resources and/or beams indicated by beam indications with lower priorities are ignored.

For another example, the conflict refers to when time-domain resources indicated respectively by multiple beams with different priorities partially or completely overlap, and corresponding indicated beams are different. For example, forwarding is performed in the time-domain resource indicated by the beam indication with a higher/highest priority by using a corresponding beam indicated thereby, and time-domain resources and/or beams indicated by beam indications with lower priorities are ignored. Or, at overlapped parts, forwarding is performed by the corresponding beam indicated by the beam indication with higher/highest priority, and at non-overlapped parts, forwarding is not performed or forwarding is performed by using separately indicated corresponding beams.

In some embodiments, the NCR does not expect that more than N (e.g. 2) beam indications conflict. For example, assuming that time-domain resources indicated by two beam indications (with different priorities) overlap, it does not expect that a third time-domain resource indicated by a third beam indication (of a different priority) overlaps with the above overlapped part. For another example, assuming that time-domain resources indicated by two beam indications (of different priorities) overlap and indicated corresponding beams are different, it does not expect that a third time-domain resource indicated by a third beam indication (of a different priority) overlap partially with the above overlapped part, or it does not expect that a third time-domain resource indicated by a third beam indication (of a different priority) overlap with the above overlapped part and another different beam is indicated.

In the embodiments of this disclosure, whether priorities of the first indication and the second indication are identical may be determined according to the above priority order, which priority of the first indication and the second indication is higher and which priority thereof is lower are determined when they are different, and the following processing is performed according to results of determination.
1) The priorities of the first indication and the second indication are identical. Following indications with identical priorities include the first indication and the second indication; however, it is not limited thereto.

In some embodiments, that the first time-domain resource and the second time-domain resource do not overlap includes that the repeater does not expect that time-domain resources indicated by indications with identical priorities overlap, or that the repeater expects that time-domain resources indicated by indications with identical priorities do not overlap. Therefore, the first time-domain resource and the second time-domain resource will not conflict, and conflict resolution is not needed.

In some embodiments, the first time-domain resource overlaps or does not overlap with the second time-domain resource (possibly conflict), the repeater does not expect that time-domain resources indicated by indications with identical priorities partially overlap, or, the repeater expects that time-domain resources indicated by indications with identical priorities do not overlap completely or overlap completely. That is, a case where the first time-domain resource completely overlap with the second time-domain resource needs to be avoided, or, in other words, the first time-domain resource need to include resource not overlapping with the second time-domain resource.

In some embodiments, for the case where conflicts may possibly occur, in the case where the first time-domain resource overlaps with the second time-domain resource, the repeater does not forward in the second time-domain resource, or does not forward in the resource of the second time-domain resource that does not overlap with the first time-domain resource, and/or, performs forwarding in the first time-domain resource (by using the first beam), or, performs forwarding in the resource of the first time-domain resource that does not overlap with the second time-domain resource (by using the first beam), wherein beams indicated for the first time-domain resource and the second time-domain resource are identical or different.

In some embodiments, for the case where conflicts may possibly occur, in the case where the first time-domain resources overlap with the second time-domain resources, the repeater forwards on a union of the first time-domain resources and the second time-domain resources (by using the same beam, such as the first beam or the second beam), wherein beams indicated for the first time-domain resources and the second time-domain resources are identical or different.

The cases in 1) is similar to those in (II), and reference may be made to the schematic diagrams in FIGs. 8A-8C, which shall not be enumerated herein any further.

2) The priority of the second indication is higher than the priority of the first indication. Following indications with different priorities include the first indication and the second indication; however, it is not limited thereto.

In some embodiments, that the first time-domain resource overlaps or does not overlap with the second time-domain resource includes that the repeater does not expect that time-domain resources indicated by indications of different priorities partially overlap, or the repeater expects that time-domain resources indicated by indications of different priorities do not overlap completely or overlap completely. That is, partial overlap of time-domain resources indicated by indications of different priorities is avoided, therefore, in the case of complete overlap, the first time-domain resource and the second time-domain resource are completely identical.

In some embodiments, the first time-domain resource overlaps with the second time-domain resource, and in the case where the first time-domain resource overlaps with the second time-domain resource, the repeater uses the second beam on a third time-domain resource, and/or does not perform forwarding on a fourth time-domain resource. The third time-domain resource is the first time-domain resource, or the second time-domain resource, or a union of the second time-domain resource and the first time-domain resource, or includes the resource in the second time-domain resource not overlapping with the first time-domain resource, and the fourth time-domain resource includes the resource in the first time-domain resource not overlapping with the second time-domain resource, and/or the resource in the second time-domain resources overlapping with the first time-domain resource. That is, the first time-domain resource overlaps with the second time-domain resource (the first indication and the second indication conflict, or, the first time-domain resource and the second time-domain resource conflict), and forwarding is performed according to the second indication with a higher priority.

In some embodiments, the first time-domain resource overlaps (partially) with the second time-domain resource, and in the case where the first time-domain resource overlaps with the second time-domain resource, the repeater uses the second beam on a fifth time-domain resource, and/or uses the first beam on a sixth time-domain resource, and/or does not perform forwarding at a second time period. The fifth time-domain resource includes a part or all of overlapped resources of the first time-domain resource and the second time-domain resource, and/or a part or all of resources in the second time-domain resource not overlapping with the first time-domain resource; and the sixth time-domain resource includes a part or all of resources in the first time-domain resource not overlapping with the second time-domain resource. The above second time period at least includes a processing time in a resource of the first time-domain resource not overlapping with the second time-domain resource. The processing time includes, for example, a time for beam switch, etc.; however, the embodiments of this disclosure are not limited thereto.

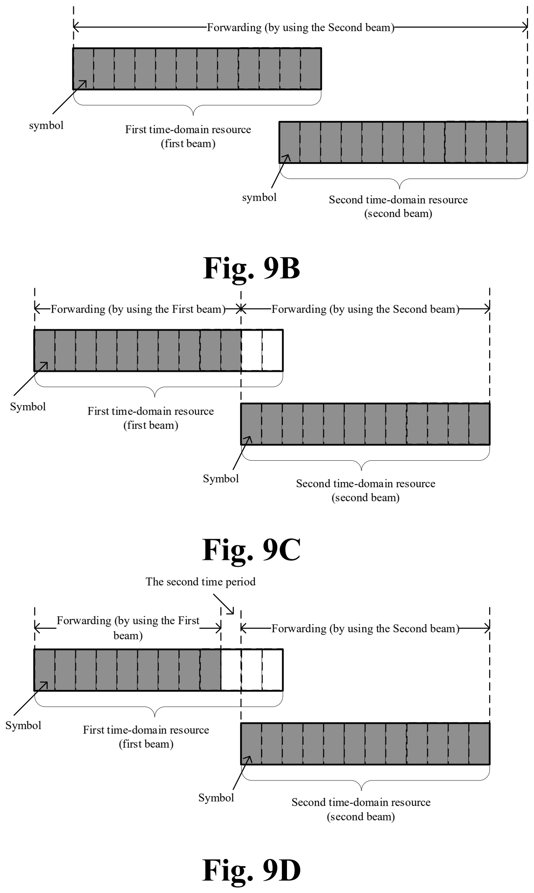

FIGs. 9A-9D are schematic diagrams of overlapping of time-domain resources (indicated by different indications) in the embodiments of this disclosure. As shown in FIG. 9A, two symbols of the first time-domain resource and the second time-domain resource overlap, the priority of the second indication is higher that of the first indication, forwarding is performed in the second time-domain resource by using the second beam, and forwarding is not performed in the resource of the first time-domain resource that does not overlap with the second time-domain resource. As shown in FIG. 9B, two symbols of the first time-domain resource and the second time-domain resource overlap, the priority of the second indication is higher that of the first indication, forwarding is performed on third time-domain resource (including a union of the first time-domain resource and the second time-domain resource) by using the second beam. As shown in FIG. 9C, two symbols of the first time-domain resource and the second time-domain resource overlap, the priority of the second indication is higher that of the first indication, forwarding is performed in the second time-domain resource by using the second beam, and forwarding is performed in the sixth time-domain resource of the first time-domain resource that does not overlap with the second time-domain resource by using the first beam. As shown in FIG. 9D, two symbols of the first time-domain resource and the second time-domain resource overlap, the priority of the second indication is higher that of the first indication, forwarding is performed in the second time-domain resource by using the second beam, forwarding is performed in the sixth time-domain resource (resources in the first time-domain resources that do not overlap with the second time-domain resources) by using the first beam, and forwarding is not performed at the second time period.

In the above embodiment, the first beam is indicated by the first information field corresponding to the second information field indicating the first time-domain resource, or, in other words, is a beam corresponding to the first time-domain resource indicated by the first indication, and the second beam is indicated by the first information field corresponding to the second information field indicating the second time-domain resource, or, in other words, is a beam corresponding to the second time-domain resource indicated by the second indication.

In some embodiments, the implementations in (I) and (II) may be implemented in a combined manner, and/or the implementations in (I) and (III) may be implemented in a combined manner.

In some embodiments, whether different (indicated) time-domain resources overlap respectively with flexible symbols may be taken into account first, in the case of overlap, overlapped symbols are excluded from the time-domain resources (remaining time-domain resources are referred to as partial time-domain resources), and then whether the remaining partial time-domain resources overlap is determined, and conflict processing in (II) or (III) is performed.

For example, the first indication indicates a seventh time-domain resource, a third part time-domain resource of the seventh time-domain resource that does not overlap with the first flexible symbol overlapping or not overlapping with a fourth part time-domain resource of a eighth time-domain resource that does not overlap with the second flexible symbol. The eighth time-domain resource is indicated by the second indication or the first indication, and indication methods of the seventh time-domain resource and eighth time-domain resource are similar to those as described above, which shall not be repeated herein any further. The above third part time-domain resource and fourth part time-domain resource may be regarded as the first time-domain resource and the second time-domain resource, and processing in (II) and (III) is performed.

In some embodiments, whether different (indicated) time-domain resources overlap may be taken into account first, and in a case where overlapping exists, processing is performed according to the implementations in (II) and (III) above, and then whether the third time-domain resource, the fourth time-domain resource, the fifth time-domain resource and the sixth time-domain resource overlap with a flexible symbol is determined, so as perform the conflict processing in (I).

For example, the first indication information indicates the seventh time-domain resource, the seventh time-domain resource overlapping with the eighth time-domain resource. Processing is performed according to the implementations in (II) and (III) to obtain the fifth part time-domain resource that are unable to forward. The fifth part time-domain resource are excluded from a union of the seventh time-domain resource and the eighth time-domain resource to obtain the sixth part time-domain resource. Whether the sixth part time-domain resource overlaps or does not overlap with the third flexible symbol (which may be the first flexible symbol or the second flexible symbol). The eighth time-domain resource is indicated by the second indication or the first indication. The sixth part time-domain resource may be regarded as the first time-domain resource and the second time-domain resource, and processing in (I) is performed.

FIGs. 10A and 10B are schematic diagrams of overlapping of time-domain resources and flexible symbols in the embodiments of this disclosure. As shown in FIG. 10A, parts overlapped with flexible symbols are first excluded respectively from the seventh time-domain resource and eighth time-domain resource to obtain the third part time-domain resource and the fourth part time-domain resource. The third part time-domain resource (i.e. the first time-domain resource) and the fourth part time-domain resource (i.e. the second time-domain resource) do not overlap, forwarding is performed in the second time-domain resource by using the second beam, forwarding is performed in the first time-domain resource by using the first beam, and forwarding is not performed on remaining resources in the union of the seventh time-domain resource and the eighth time-domain resource except for the first time-domain resource and the second time-domain resource. As shown in FIG. 10B, resources that are unable to forward due to resource overlapping are first excluded according to the methods in (II) or (III), and then forwarding is performed using second beam in the remaining resources after resources overlapping with flexible symbols are excluded. Forwarding is not performed at remaining positions in the seventh time-domain resource and the eighth time-domain resource.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

According to the embodiments of this disclosure, by clarifying that time-domain resources to which access link beams correspond overlap or do not overlap with flexible symbols and processing in case of overlapping, the time-domain resources when the repeater performs forwarding (forwarding uplink/downlink signals) may be made to match with time-domain resources of the terminal equipment receiving/transmitting signals, thereby improving effects of amplifying/enhancing signals, saving power consumption of the repeater, reducing interference to other devices in the network, and improving throughput of the network.

### Embodiments of a second aspect

The embodiments of this disclosure provide an information transmission method, which shall be described from a network device side, with contents identical to those in the embodiments of the first aspect being not going to be described herein any further.

FIG. 3 is a schematic diagram of the information transmission method of the embodiments of this disclosure. As shown in FIG. 3, the method includes:
301: the network device transmits first indication indicating a first time-domain resource to a repeater, the first time-domain resource overlapping or not overlapping with a first flexible symbol, and/or overlapping or not overlapping with a second time-domain resource, the second time-domain resource being indicated by a second indication or the first indication.

Reference may be made to the embodiments of the first aspect for implementations of whether overlap occurs and how to process the cases of overlapping, which shall not be repeated herein any further.

It should be noted that FIG. 3 only schematically illustrates the embodiments of this disclosure; however, this disclosure is not limited thereto. For example, an order of execution of the operations may be appropriately adjusted, and furthermore, some other operations may be added, or some operations therein may be reduced. And appropriate variants may be made by those skilled in the art according to the above contents, without being limited to what is contained in FIG. 3.

The steps or processes related to this disclosure are only described above; however, this disclosure is not limited thereto. The method of the embodiments of this disclosure may also include other steps or processes, and reference may be made to relevant techniques for specific contents of these steps or processes.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

### Embodiments of a third aspect

The embodiments of this disclosure provide a repeater. The repeater may be, for example, the NCR as described above, or a network device or terminal equipment having a function of forwarding, or one or some components or assemblies configured in the NCR or the network device or the terminal equipment.

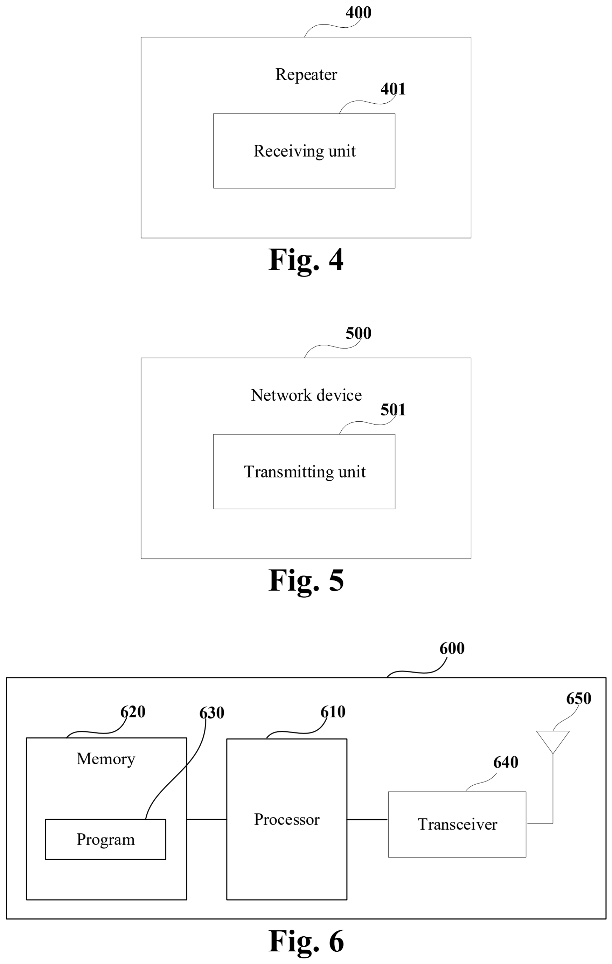

FIG. 4 is a schematic diagram of the repeater of the embodiments of this disclosure. As a principle of the repeater for solving problems is similar to that of the method in the embodiments of the first aspect, reference may be made to the embodiments of the first aspect for implementation of the repeater, with identical contents being not going to be described herein any further.

As shown in FIG. 4, the repeater 400 includes:
a receiving unit 401 configured to receive a first indication indicating a first time-domain resource, the first time-domain resource overlapping or not overlapping with a first flexible symbol, and/or overlapping or not overlapping with a second time-domain resource, the second time-domain resource being indicated by a second indication or the first indication,
   or,
a receiving unit 401 configured to receive a first indication indicating a time-domain resource,
wherein the receiving unit 401 does not expect that the time-domain resource indicated by the first indication overlap with the first flexible symbol, or, the repeater expects that the time-domain resource indicated by the first indication does not overlap with the first flexible symbol; and/or
the receiving unit 401 does not expect that time-domain resources indicated by indications of identical priority overlap, or, the repeater expects that time-domain resources indicated by indications of identical priority do not overlap; and/or
the receiving unit 401 does not expect that time-domain resources indicated by indications of different priorities partially overlap, or, the repeater expects that time-domain resources indicated by indications of different priorities do not overlap completely or overlap completely.

Reference may be made to the embodiments of the first aspect for implementations of whether overlap occurs and how to process the cases of overlapping, which shall not be repeated herein any further.

In some embodiment, the repeater may further include a processing unit (not shown in figures).

The processing unit is configured not to forward in the first time-domain resource.

Or, the processing unit is configured not to forward or to forward in a first part of the resource of the first time-domain resource, and/or to forward or not to forward in a second part of the resource of the first time-domain resource.

Or, the processing unit is configured not to forward in the second time-domain resource, and/or not to forward in a part resource of the second time-domain resource not overlapping with the first time-domain resource; and/or to forward in the first time-domain resource, and/or to forward in a part resource of the first time-domain resource not overlapping with the second time-domain resource.

Or, the processing unit is configured to forward in a union of the first time-domain resource and the second time-domain resource.

Or, the processing unit is configured to use a second beam in a third time-domain resource, and/or not to perform forwarding in a fourth time-domain resource.

Or, the processing unit is configured to use the second beam in a fifth time-domain resource, and/or use the first beam in a sixth time-domain resource, and/or not to perform forwarding at a second time period.

Reference may be made to the embodiments of the first aspect for processing scenarios and processing methods of the processing unit.

Furthermore, for the sake of simplicity, connection relationships between the components or modules or signal profiles thereof are only illustrated in FIG. 4. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

### Embodiments of a fourth aspect

The embodiments of this disclosure provide a network device.

FIG. 5 is a schematic diagram of the network device of the embodiments of this disclosure. As a principle of the network device for solving problems is similar to that of the method in the embodiments of the second aspect, reference may be made to the implementation of the method described in the embodiments of the second aspect for implementation of the network device, with identical or related contents being not going to be described herein any further.

As shown in FIG. 5, the network device 500 of the embodiments of this disclosure includes:
a transmitting unit 501 configured to transmit first indication indicating a first time-domain resource to a repeater, the first time-domain resource overlapping or not overlapping with a first flexible symbol, and/or overlapping or not overlapping with a second time-domain resource, the second time-domain resource being indicated by a second indication or the first indication.

It should be noted that the components or modules related to this disclosure are only described above. However, this disclosure is not limited thereto, and the network device 500 of the embodiments of this disclosure may further include other components or modules, and reference may be made to related techniques for particulars of these components or modules.

Furthermore, for the sake of simplicity, connection relationships between the components or modules or signal profiles thereof are only illustrated in FIG. 5. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

### Embodiments of a fifth aspect

The embodiments of this disclosure provide a communication system. FIG. 1 is a schematic diagram of the communication system of the embodiments of this disclosure. As shown in FIG. 1, the communication system includes a network device 101, a repeater 102 and a terminal equipment 103. For the sake of simplicity, description is given in FIG. 1 by taking one network device, one repeater and two terminal equipments only as an example; however, the embodiments of this disclosure are not limited thereto.

In the embodiments of this disclosure, existing services or services that may be implemented in the future may be performed between the network device 101 and the terminal equipment 103. For example, such services may include but not limited to enhanced mobile broadband (eMBB), massive machine type communication (mMTC), ultra-reliable and low-latency communication (URLLC), and vehicle to everything (V2X) communication, etc. The repeater 102 is configured to execute the information reception method in the embodiments of the first aspect, and the network device 101 is configured to execute the information transmission method in the embodiments of the second aspect, contents of which being incorporated herein, which shall not be repeated herein any further.

The embodiments of this disclosure further provide an electronic device, which may be, for example, a repeater or a network device.

FIG. 6 is a schematic diagram of a structure of the electronic device of the embodiments of this disclosure. As shown in FIG. 6, the electronic device 600 may include a processor 610 (such as a central processing unit (CPU)) and a memory 620, the memory 620 being coupled to the processor 610. Wherein, the memory 620 may store various data, and furthermore, it may store a program 630 for information processing, and execute the program 630 under control of the processor 610.

For example, the processor 610 may be configured to execute a program to execute the information transmission method described in the embodiments of the second aspect.

For another example, the processor 610 may be configured to execute a program to execute the information reception method described in the embodiments of the first aspect.

Furthermore, as shown in FIG. 6, the electronic device 600 may include a transceiver 640, and an antenna 650, etc. Wherein, functions of the above components are similar to those in the related art, and shall not be described herein any further. It should be noted that the electronic device 600 does not necessarily include all the parts shown in FIG. 6, and furthermore, the electronic device 600 may include parts not shown in FIG. 6, and the related art may be referred to.

Embodiments of this disclosure provide a computer program, which, when executed in a network device, will cause a computer to carry out the information transmission method described in the embodiments of the second aspect in the network device.

Embodiments of this disclosure provide a storage medium, including a computer readable program, which will cause a computer to carry out the information transmission method described in the embodiments of the second aspect in the network device.

Embodiments of this disclosure provide a computer program, which, when executed in a repeater, will cause a computer to carry out the information reception method described in the embodiments of the first aspect in the repeater.

Embodiments of this disclosure provide a storage medium, including a computer readable program, which will cause a computer to carry out the information reception method described in the embodiments of the first aspect in the repeater.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile termination, and may also be stored in a memory card of a pluggable mobile termination. For example, if equipment (such as a mobile termination) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the spirits and principle of the present disclosure, and such variants and modifications fall within the scope of the present disclosure.

As to implementations containing the above embodiments, following supplements are further disclosed.
1. An information reception method, applicable to a repeater, characterized in that the method comprises:
   receiving a first indication indicating a first time-domain resource by the repeater, the first time-domain resource overlapping or not overlapping with a first flexible symbol, and/or overlapping or not overlapping with a second time-domain resource, the second time-domain resource being indicated by a second indication or the first indication.
2. The method according to supplement 1, wherein a first subcarrier spacing of the first time-domain resource is identical to or different from a second subcarrier spacing of the first flexible symbol.
3. The method according to supplement 1 or 2, wherein the second time-domain resource overlaps or does not overlap with a second flexible symbol.
4. The method according to supplement 3, wherein a third subcarrier spacing of the second time-domain resource is identical to or different from a fourth subcarrier spacing of the second flexible symbol.
5. The method according to any one of supplements 1-4, wherein the first subcarrier spacing of the first time-domain resource is identical to or different from the third subcarrier spacing of the second time-domain resource.
6. The method according to any one of supplements 1-5, wherein the first flexible symbol is a semi-static flexible symbol.
7. The method according to any one of supplements 1-6, wherein the method further includes (or, the first time-domain resource not overlapping with the first flexible symbol includes): not expecting by the repeater that the time-domain resource indicated by the first indication overlap with the first flexible symbol, or, expecting by the repeater that the time-domain resource indicated by the first indication does not overlap with the first flexible symbol.
8. The method according to any one of supplements 1-6, wherein the method further includes (or, the first time-domain resource overlapping or not overlapping with the first flexible symbol includes): not expecting by the repeater that the time-domain resource indicated by the first indication completely overlap with the first flexible symbol, or, expecting by the repeater that the time-domain resource indicated by the first indication completely does not overlap with the first flexible symbol or incompletely overlap with the first flexible symbol.
9. The method according to any one of supplements 1-6, wherein the method further includes (or, the first time-domain resource overlapping or not overlapping with first flexible symbol includes): not expecting by the repeater that the time-domain resource indicated by the first indication partially overlap with the first flexible symbol, or, expecting by the repeater that the time-domain resource indicated by the first indication does not completely overlap with the first flexible symbol or completely overlaps with the first flexible symbol.
10. The method according to any one of supplements 1-6, wherein (in the case where the first time-domain resource overlaps with the first flexible symbol) the repeater does not forward in the first time-domain resource.
11. The method according to any one of supplements 1-10, wherein the first time-domain resource is indicated by a second information field (a second information field X), wherein (in the case where the first time-domain resource overlaps with the first flexible symbol) the second information field and/or a second information field after the second information field do(es) not indicate a time-domain resource(s) and/or is/are invalid and/or is/are set to be a second specific value and/or is/are ignored by the repeater, and/or, a first information field to which the second information field corresponds and/or a first information field to which a second information field after the second information field do(es) not indicate a beam and/or is/are invalid and/or is/are set to a fourth specific value and/or is/are ignored by the repeater, and/or, an information field after the second information field is invalid and/or set to a fifth specific value and/or is ignored by the repeater, and/or, a first information field included in an information block where the second information field is located does not indicate a beam and/or is invalid and/or is set to a fourth specific value and/or is ignored by the repeater, a first information field included in an information block after an information block where the second information field is located does not indicate a beam and/or is invalid and/or is set to a fourth specific value and/or is ignored by the repeater, and/or a second information field included in an information block after an information block where the second information field is located does not indicate a time-domain resource and/or is invalid and/or is set to a second specific value and/or is ignored by the repeater, and/or the second information field is a last information field (of the downlink control information), and/or an information block where the second information field is located is a last information block (of the downlink control information), and/or, the second information field is a last second information field (of the downlink control information), and/or a first information field to which the second information field corresponds is a last first information field (of the downlink control information), and/or the second information field does not have a corresponding first information field.
12. The method according to any one of supplements 1- 6, wherein,
   the repeater does not forward or forward in a first part of the resource of the first time-domain resource, and/or forwards or does not forward in a second part of the resource of the first time-domain resource.
13. The method according to supplement 12, wherein the first part of the resource includes a resource (in the first time-domain resource) overlapping with the first flexible symbol and/or a resource overlapping with a first time period.
14. The method according to supplement 12, wherein the second part of the resource includes a resource (in the first time-domain resource) not overlapping with the first flexible symbol, or a resource in resources (in the first time-domain resource) not overlapping with the first flexible symbol other than the first time period, or a resource (in the first time-domain resource) not overlapping with the first flexible symbol and not overlapping with the first time period.
15. The method according to any one of supplements 1-14, wherein the first time-domain resource and the second time-domain resource are indicated by different second information fields in the first indication.
16. The method according to any one of supplements 1-15, wherein the method further includes (or, the first time-domain resource not overlapping with the second time-domain resource includes): not expecting by the repeater that different time-domain resources indicated by the first indication overlap, or, expecting by the repeater that different time-domain resources indicated by the first indication do not overlap.
17. The method according to any one of supplements 1-15, wherein the method further includes (or, the first time-domain resource overlapping or not overlapping with the second time-domain resource includes): not expecting by the repeater that different time-domain resources indicated by the first indication completely overlap, or, expecting by the repeater that different time-domain resources indicated by the first indication completely do not overlap or overlap incompletely.
18. The method according to any one of supplements 1-15, wherein the method further includes (or, the first time-domain resources overlapping or not overlapping with the second time-domain resources includes): not expecting by the repeater that different time-domain resources indicated by the first indication partially overlap, or, expecting by the repeater that different time-domain resources indicated by the first indication completely do not overlap or overlap completely.
19. The method according to any one of supplements 15-18, wherein (in the case where the first time-domain resource overlaps with the second time-domain resource,) the repeater does not forward in the second time-domain resource, or does not forward in a part resource in the second time-domain resource that does not overlap with the first time-domain resource; and/or, forwards in the first time-domain resource (by using a first beam), or forwards in a part resource in the first time-domain resource that does not overlap with the second time-domain resource (by using a first beam).
20. The method according to any one of supplements 15-18, wherein (in the case where the first time-domain resource overlaps with the second time-domain resource,) the repeater forwards in a union of the first time-domain resource and the second time-domain resource (by using identical beam).
21. The method according to supplement 19 or 20, wherein beams indicated for the first time-domain resource and the second time-domain resource are identical or different.
22. The method according to any one of supplements 15-18, wherein a second information field Y used to indicate the second time-domain resource is after a second information field X used to indicate the first time-domain resource.
23. The method according to supplement 22, wherein (in the case where the first time-domain resource overlaps with the second time-domain resource) the second information field Y and/or a second information field after the second information field Y does/do not indicate a time-domain resource and/or is/are invalid and/or is/are set to be a second specific value and/or is/are ignored by the repeater, and/or, a first information field to which the second information field Y corresponds and/or a first information field to which a second information field after the second information field Y corresponds does/do not indicate a beam and/or is/are invalid and/or is/are set to be a fourth specific value and/or is/are ignored by the repeater, and/or, an information field after the second information field Y is invalid and/or is set to be a fifth specific value and/or is ignored by the repeater, and/or, a first information field included in an information block where the second information field Y is located does not indicate a beam and/or is invalid and/or is set to be a fourth specific value and/or is ignored by the repeater, and/or a first information field included in an information block after an information block where the second information field Y is located does not indicate a beam and/or is invalid and/or is set to be a fourth specific value and/or is ignored by the repeater, and/or, a second information field included in an information block after an information block where the second information field Y is located does not indicate a time-domain resource and/or is invalid and/or is set to be a second specific value and/or is ignored by the repeater, and/or the second information field Y is a last information field (of the downlink control information), and/or an information block where the second information field Y is located is a last information block (of the downlink control information), and/or, the second information field Y is a last second information field (of the downlink control information), and/or, a first information field to which the second information field Y corresponds is a last first information field (of the downlink control information), and/or, the second information field Y does not have a corresponding first information field.
24. The method according to any one of supplements 1-14 and 23, wherein the second time-domain resource is indicated by the second indication.
25. The method according to supplement 24, wherein priorities of the first indication and the second indication are identical.
26. The method according to supplement 24 or 25, wherein the method further includes (or, the first time-domain resource not overlapping with the second time-domain resource includes): not expecting by the repeater that time-domain resources indicated by indications having identical priorities overlap, or expecting by the repeater that time-domain resources indicated by indications having identical priorities do not overlap.
27. The method according to supplement 24 or 25, wherein the method further includes (or, the first time-domain resource overlapping or not overlapping with the second time-domain resource includes): not expecting by the repeater that time-domain resources indicated by indications having identical priorities partially overlap, or expecting by the repeater that time-domain resources indicated by indications having identical priorities completely do not overlap or overlap completely.
28. The method according to supplement 24 or 25 or 26, wherein (in the case where the first time-domain resource overlaps with the second time-domain resource,) the repeater does not forward in the second time-domain resource, or does not forward in a part resource in the second time-domain resource that does not overlap with the first time-domain resource; and/or, forwards in the first time-domain resource (by using a first beam), or forward in a part resource in the first time-domain resource that does not overlap with the second time-domain resource (by using a first beam).
29. The method according to any one of supplements 24-28, wherein (in the case where the first time-domain resource overlaps with the second time-domain resource,) the repeater forwards in a union of the first time-domain resource and the second time-domain resource (by using identical beam).
30. The method according to supplement 28 or 29, wherein beams indicated for the first time-domain resource and the second time-domain resource are identical or different.
31. The method according to supplement 24, wherein a priority of the second indication is higher than a priority of the first indication.
32. The method according to supplement 24 or 31, wherein the method further includes (or, the first time-domain resource overlapping or not overlapping with the second time-domain resource includes): not expecting by the repeater that time-domain resources indicated by indications having different priorities partially overlap, or expecting by the repeater that time-domain resources indicated by indications having different priorities completely do not overlap or overlap completely.
33. The method according to supplement 24 or 31 or 32, wherein the method further includes (in the case where the first time-domain resource overlaps with the second time-domain resource): using a second beam by the repeater in a third time-domain resource, and/or not forwarding by the repeater in a fourth time-domain resource.
34. The method according to supplement 33, wherein the third time-domain resource is the first time-domain resource, or the second time-domain resource, or a union of the second time-domain resource and the first time-domain resource, or include a resource in the second time-domain resource not overlapping with the first time-domain resource;
   and the fourth time-domain resource includes a resource in the first time-domain resource not overlapping with the second time-domain resource, and/or a resource in the second time-domain resource overlapping with the first time-domain resource.
35. The method according to supplement 24 or 31 or 32, wherein the method further comprises:
   using a second beam by the repeater in a fifth time-domain resource, and/or using a first beam by the repeater in a sixth time-domain resource, and/or not forwarding by the repeater at a second time period.
36. The method according to supplement 35, wherein the fifth time-domain resource includes a part or all of overlapped resource of the first time-domain resource and the second time-domain resource, and/or a part or all of resource in the second time-domain resource not overlapping with the first time-domain resource;
   and the sixth time-domain resource includes a part or all of resource in the first time-domain resource not overlapping with the second time-domain resource.
37. The method according to any one of supplements 1-36, wherein the first indication is periodic or semi-persistent or dynamic, and/or the second indication is periodic or semi-persistent or dynamic.
38. The method according to any one of supplements 1-37, wherein the first indication and second indication are configured by different first information, and/or is/are identified by different indices.
39. The method according to any one of supplements 1-37, wherein the first indication and/or the second indication is/are configured by different third information, and/or is/are identified by different indices, and/or is/are activated/deactivated by different fifth information.
40. The method according to any one of supplements 1-37, wherein the first indication and/or the second indication is/are carried by different DCI.
41. An information reception method, applicable to a repeater, wherein the method comprises:
   receiving a first indication indicating a time-domain resource by the repeater;
   not expecting by the repeater that a time-domain resource indicated by the first indication overlaps with a first flexible symbol, or expecting by the repeater that a time-domain resource indicated by the first indication does not overlap with a first flexible symbol; and/or,
   not expecting by the repeater that time-domain resources indicated by indications having identical priorities overlap, or expecting by the repeater that time-domain resources indicated by indications having identical priorities do not overlap; and/or,
   not expecting by the repeater that time-domain resources indicated by indications having different priorities partially overlap, or expecting by the repeater that time-domain resources indicated by indications having different priorities completely do not overlap or overlap completely.
42. An information reception method , applicable to a repeater, characterized in that the method comprises:
   receiving a first indication indicating a seventh time-domain resource by the repeater, wherein a third part time-domain resource of the seventh time-domain resources that does not overlap with a first flexible symbol overlaps or does not overlap with a fourth part time-domain resource of a eighth time-domain resource that does not overlap with a second flexible symbol, the eighth time-domain resource being indicated by a second indication or by the first indication; or,
   receiving a first indication indicating a seventh time-domain resource by the repeater, wherein the seventh time-domain resource overlaps with a eighth time-domain resource, and a fifth part time-domain resource in a union of the seventh time-domain resource and the eighth time-domain resource determined as being unable to perform forwarding and a sixth part time-domain resource in the union excluding the fifth part time-domain resource overlaps or does not overlap with a third flexible symbol, the eighth time-domain resource being indicated by a second indication or by the first indication.
43. An information transmission method , applicable to a network device side, wherein the method comprises:
   transmitting a first indication indicating a first time-domain resource by the network device to a repeater, the first time-domain resource overlapping or not overlapping with a first flexible symbol, and/or overlapping or not overlapping with a second time-domain resource, the second time-domain resource being indicated by a second indication or the first indication; or
   transmitting a first indication indicating a seventh time-domain resource, wherein a third part time-domain resource of the seventh time-domain resource that does not overlap with a first flexible symbol overlaps or does not overlap with a fourth part time-domain resource of a eighth time-domain resource that does not overlap with a second flexible symbol, the eighth time-domain resource being indicated by a second indication or by the first indication; or,
   transmitting a first indication indicating a seventh time-domain resource, wherein the seventh time-domain resource overlaps with a eighth time-domain resource, and a fifth part time-domain resource in a union of the seventh time-domain resource and the eighth time-domain resource determined as being unable to perform forwarding and a sixth part time-domain resource in the union excluding the fifth part time-domain resource overlaps or does not overlap with a third flexible symbol, the eighth time-domain resource being indicated by a second indication or by the first indication.
44. A network device, including a memory and a processor, the memory storing a computer program, and the processor being configured to execute the computer program to carry out the method as described in supplement 43.
45. A repeater, including a memory and a processor, the memory storing a computer program, and the processor being configured to execute the computer program to carry out the method as described in any one of supplements 1-42.

## Claims

1. A repeater, wherein the repeater comprises:
a receiving unit configured to receive a first indication indicating a first time-domain resource, the first time-domain resource overlapping or not overlapping with a first flexible symbol, and/or overlapping or not overlapping with a second time-domain resource, the second time-domain resource being indicated by a second indication or the first indication.

2. The repeater according to claim 1, wherein the second time-domain resource overlaps or does not overlap with a second flexible symbol.

3. The repeater according to claim 1, wherein a first subcarrier spacing of the first time-domain resource is identical to or different from a third subcarrier spacing of the second time-domain resource; and/or
the first indication is periodic or semi-persistent or dynamic, and/or the second indication is periodic or semi-persistent or dynamic.

4. The repeater according to claim 1, wherein the receiving unit does not expect that the time-domain resource indicated by the first indication overlaps with the first flexible symbol, or, expects that the time-domain resource indicated by the first indication does not overlap with the first flexible symbol; and/or
does not expect that different time-domain resources indicated by the first indication overlap, or, expects that different time-domain resources indicated by the first indication do not overlap.

5. The repeater according to claim 1, wherein the repeater further comprises:
a processing unit configured not to forward in the first time-domain resource.

6. The repeater according to claim 1, wherein the repeater further comprises:
a processing unit configured not to forward or to forward in a first part of the resource of the first time-domain resource, and/or to forward or not to forward in a second part of the resource of the first time-domain resource.

7. The repeater according to claim 1, wherein the first time-domain resource and the second time-domain resource are indicated by different second information fields in the first indication.

8. The repeater according to claim 7, wherein the repeater further comprises:
a processing unit configured not to forward in the second time-domain resource, or not to forward in a part resource in the second time-domain resource that does not overlap with the first time-domain resource; and/or, forwards in the first time-domain resource, or to forward in a part resource in the first time-domain resource that does not overlap with the second time-domain resource.

9. The repeater according to claim 7, wherein the repeater further comprises:
a processing unit configured to forward in a union of the first time-domain resource and the second time-domain resource.

10. The repeater according to claim 9, wherein beams indicated for the first time-domain resource and the second time-domain resource are identical or different.

11. The repeater according to claim 7, wherein a second information field Y used to indicate the second time-domain resource is after a second information field X used to indicate the first time-domain resource.

12. The repeater according to claim 11, wherein (in the case where the first time-domain resource overlaps with the second time-domain resource) the second information field Y and/or a second information field after the second information field Y does/do not indicate a time-domain resource and/or is/are invalid and/or is/are set to be a second specific value and/or is/are ignored by the repeater, and/or, a first information field to which the second information field Y corresponds and/or a first information field to which a second information field after the second information field Y corresponds does/do not indicate a beam and/or is/are invalid and/or is/are set to be a fourth specific value and/or is/are ignored by the repeater, and/or, an information field after the second information field Y is invalid and/or is set to be a fifth specific value and/or is ignored by the repeater, and/or, a first information field included in an information block where the second information field Y is located does not indicate a beam and/or is invalid and/or is set to be a fourth specific value and/or is ignored by the repeater, and/or a first information field included in an information block after an information block where the second information field Y is located does not indicate a beam and/or is invalid and/or is set to be a fourth specific value and/or is ignored by the repeater, and/or, a second information field included in an information block after an information block where the second information field Y is located does not indicate a time-domain resource and/or is invalid and/or is set to be a second specific value and/or is ignored by the repeater, and/or the second information field Y is a last information field (of the downlink control information), and/or an information block where the second information field Y is located is a last information block (of the downlink control information), and/or, the second information field Y is a last second information field (of the downlink control information), and/or, a first information field to which the second information field Y corresponds is a last first information field (of the downlink control information), and/or, the second information field Y does not have a corresponding first information field.

13. The repeater according to claim 1, wherein the second time-domain resource is indicated by the second indication.

14. The repeater according to claim 13, wherein a priority of the second indication is higher than a priority of the first indication.

15. The repeater according to claim 14, wherein the repeater further comprises:
a processing unit configured to use a second beam in a third time-domain resource, and/or not to forward in a fourth time-domain resource.

16. The repeater according to claim 15, wherein the third time-domain resource is the first time-domain resource, or the second time-domain resource, or a union of the second time-domain resource and the first time-domain resource, or includes a resource in the second time-domain resource not overlapping with the first time-domain resource;
and the fourth time-domain resource includes a resource in the first time-domain resource not overlapping with the second time-domain resource, and/or a resource in the second time-domain resource overlapping with the first time-domain resource.

17. The repeater according to claim 13, wherein the repeater further comprises:
a processing unit configured to use a second beam in a fifth time-domain resource, and/or to use a first beam in a sixth time-domain resource, and/or not to forward at a second time period.

18. The repeater according to claim 17, wherein the fifth time-domain resource includes a part or all of overlapped resources of the first time-domain resource and the second time-domain resource, and/or a part or all of resource in the second time-domain resource not overlapping with the first time-domain resource;
and the sixth time-domain resource includes a part or all of resources in the first time-domain resource not overlapping with the second time-domain resource.

19. A network device, wherein the network device comprises:
a transmitting unit configured to transmit a first indication indicating a first time-domain resource to a repeater, the first time-domain resource overlapping or not overlapping with a first flexible symbol, and/or overlapping or not overlapping with a second time-domain resource, the second time-domain resource being indicated by a second indication or the first indication.

20. A communication system, comprises a repeater as claimed in claim 1 and/or a network device as claimed in claim 19.
